# EUROPEAN PATENT APPLICATION

(11) **EP 4 707 163 A1**
(43) Date of publication of application: **11.03.2026**
(21) Application number: 25197691.6
(22) Date of filing: 22.08.2025
(51) Int. Cl.: B63H 20/28

(54) **ELECTRIC PROPULSION DEVICE**

(30) Priority: 26.08.2024 JP 2024144578
(71) Applicant: Suzuki Motor Corporation, Shizuoka 432-8611 (JP)
(72) Inventor: MIYASHITA, Yasushi, Hamamatsu-shi (JP)
(74) Representative: Haseltine Lake Kempner LLP

(57) **Abstract**

An electric propulsion device includes a propeller, a motor rotating the propeller, an inverter controlling driving of the motor, and a cooling device cooling the motor and the inverter. The cooling device includes an intake port taking water around the electric propulsion device into the electric propulsion device as cooling water, a drain port discharging the cooling water taken into the electric propulsion device to around the electric propulsion device, a pump flowing the cooling water from the intake port to the drain port in the electric propulsion device, a motor water jacket cooling the motor with cooling water taken into the electric propulsion device, and an inverter water jacket cooling the inverter with cooling water taken into the electric propulsion device. The motor water jacket and the inverter water jacket are connected in series between the intake port and the drain port in the electric propulsion device.

## Description

### TECHNICAL FIELD

The present invention relates to an electric propulsion device for propelling a boat.

### BACKGROUND ART

JP2005-162055A describes an electric outboard motor. The outboard motor includes an electric motor as a power source and a water-cooling cooling device that removes or reduces heat generated by the electric motor.

### SUMMARY OF INVENTION

According to one advantageous aspect of the present invention, there is provided an electric propulsion device for propelling a boat, the electric propulsion device including:
a propeller provided in a lower part of the electric propulsion device and configured to generate thrust for the boat;
a motor provided in an upper part of the electric propulsion device and configured to rotate the propeller;
an inverter provided above the motor and configured to control driving of the motor; and
a cooling device configured to cool the motor and the inverter, in which
the cooling device includes
   an intake port configured to take water around the electric propulsion device into the electric propulsion device as cooling water,
   a drain port configured to discharge the cooling water taken into the electric propulsion device to around the electric propulsion device,
   a pump configured to flow the cooling water from the intake port to the drain port in the electric propulsion device,
   a motor water jacket configured to cool the motor with cooling water taken into the electric propulsion device, and
   an inverter water jacket configured to cool the inverter with cooling water taken into the electric propulsion device, and
the motor water jacket and the inverter water jacket are connected in series between the intake port and the drain port in the electric propulsion device.

### BRIEF DESCRIPTION OF DRAWINGS

Fig. 1 is an external view illustrating an outboard motor according to an example of the present invention as viewed from behind.
Fig. 2 is an external view illustrating the outboard motor according to the example of the present invention as viewed from the left.
Fig. 3 is a cross-sectional view illustrating the outboard motor cut along a line A-A in Fig. 1 as viewed from the left.
Fig. 4 is an exploded view of the outboard motor in Fig. 3.
Fig. 5 is a block diagram illustrating a configuration of a cooling device provided in the outboard motor according to the example of the present invention.
Fig. 6A is an enlarged cross-sectional view illustrating a portion of the outboard motor in Fig. 3 including an intake port, a pump, and a speed reducer water jacket, Fig. 6B is an enlarged cross-sectional view illustrating a portion of the outboard motor in Fig. 6A from the pump to the speed reducer water jacket, and Fig. 6C is an enlarged cross-sectional view illustrating a portion of the outboard motor in Fig. 6A from the speed reducer water jacket to a motor water jacket.
Fig. 7A is an explanatory diagram illustrating the motor water jacket in the outboard motor of the example of the present invention, Fig. 7B is a cross-sectional view illustrating a motor cut along a line D-D in Fig. 7A as viewed from above, and Fig. 7C is a cross-sectional view illustrating the motor cut along a line E-E in Fig. 7A as viewed from above.
Fig. 8A is a cross-sectional view illustrating the outboard motor cut along a line B-B in Fig. 1 as viewed from the left, and Fig. 8B is an enlarged cross-sectional view illustrating a portion of the outboard motor in Fig. 8A from the motor water jacket to an inverter water jacket.
Fig. 9 is a cross-sectional view of the outboard motor cut along a line C-C in Fig. 1 as viewed from the right.
Fig. 10 is a block diagram illustrating a configuration of a cooling device in an outboard motor according to another example of the present invention.

### DESCRIPTION OF EMBODIMENTS

As an output of a motor of an electric propulsion device increases, both an amount of heat generated by the motor and an amount of heat generated by devices other than the motor increase. Therefore, there is a demand for efficient cooling of both the motor and the devices other than the motor using a water-cooling cooling device. For example, the electric propulsion device is provided with an inverter that controls driving of the motor. The inverter includes a power module that generates heat during operation. When the motor is driven at high output, an amount of heat generated by the power module increases. Therefore, as the output of the motor increases, there is a demand also for efficient cooling of the inverter using the water-cooling cooling device.

When a device provided in the electric propulsion device is cooled by the water-cooling cooling device, the device is provided with a water jacket and cooling water flows in the water jacket. Here, the electric propulsion device is provided with a cooling water supply passage that supplies cooling water to the water jacket, and a cooling water discharge passage that discharges the cooling water flowed in the water jacket from the water jacket.

When a plurality of devices including the motor in the electric propulsion device are cooled by the water-cooling cooling device, it is conceivable to provide a water jacket for each of the plurality of devices and to flow cooling water in each of the plurality of the water jackets. However, a cooling water supply passage that supplies cooling water to each of the plurality of water jackets and a cooling water discharge passage for discharging cooling water from each of the plurality of water jackets will be required, and providing such cooling water supply passage and cooling water discharge passage in the electric propulsion device may complicate a structure of the electric propulsion device.

The present invention is made considering, for example, the problem described above, and an object of the present invention is to provide an electric propulsion device in which each of a plurality of devices provided in the electric propulsion device can be efficiently cooled by a water-cooling method and cooling of the plurality of devices can be achieved by a simple structure.

An electric propulsion device of an embodiment of the present invention is an electric propulsion device for propelling a boat, and includes a propeller that is provided in a lower part of the electric propulsion device and generates thrust for the boat, a motor that is provided in an upper part of the electric propulsion device and rotates the propeller, an inverter that is provided above the motor and controls driving of the motor, and a cooling device that cools the motor and the inverter.

In the electric propulsion device of the embodiment, the cooling device includes an intake port that takes water around the electric propulsion device into the electric propulsion device as cooling water, a drain port that discharges the cooling water taken into the electric propulsion device to around the electric propulsion device, a pump that flows the cooling water from the intake port to the drain port in the electric propulsion device, a motor water jacket that cools the motor with cooling water taken into the electric propulsion device, and an inverter water jacket that cools the inverter with cooling water taken into the electric propulsion device.

In the electric propulsion device of the embodiment, the motor water jacket and the inverter water jacket are connected in series between the intake port and the drain port.

When the motor water jacket and inverter water jacket are connected in series between the intake port and the drain port in a direction from the intake port to the drain port in the order of the motor water jacket and the inverter water jacket, the cooling water taken into the electric propulsion device from the intake port is supplied to the motor water jacket by driving the pump and flows in the motor water jacket. Accordingly, the motor is cooled. The cooling water flowed in the motor water jacket is discharged from the motor water jacket, and is then supplied to the inverter water jacket and flows in the inverter water jacket. Accordingly, the inverter is cooled. The cooling water flowed in the inverter water jacket is discharged from the inverter water jacket, and is then discharged from the drain port to around the electric propulsion device.

When the motor water jacket and inverter water jacket are connected in series between the intake port and the drain port in the direction from the intake port to the drain port in the order of the inverter water jacket and the motor water jacket, the cooling water taken into the electric propulsion device from the intake port is supplied to the inverter water jacket by driving the pump, and flows in the inverter water jacket. Accordingly, the inverter is cooled. The cooling water flowed in the inverter water jacket is discharged from the inverter water jacket, and is then supplied to the motor water jacket and flows in the motor water jacket. Accordingly, the motor is cooled. The cooling water flowed in the motor water jacket is discharged from the motor water jacket, and is then discharged from the drain port to around the electric propulsion device.

According to the electric propulsion device of the embodiment, the motor and the inverter provided in the electric propulsion device can be efficiently cooled by a water-cooling method. According to the electric propulsion device of the embodiment, the motor water jacket and the inverter water jacket are connected in series between the intake port and the drain port in the electric propulsion device, so that cooling of the motor and the inverter using a water-cooling method can be realized with a simple structure. That is, when the motor and the inverter are cooled by a water-cooling method, a method of connecting the motor water jacket and the inverter water jacket in parallel between the intake port and the drain port can also be considered. However, since branch passages for distributing and supplying cooling water taken into the electric propulsion device from the intake port to the motor water jacket and the inverter water jacket or junction passages for carrying cooling water discharged from the motor water jacket and cooling water discharged from the inverter water jacket to the drain port are required, a structure of the electric propulsion device may become complicated by providing such branch passages and junction passages in the electric propulsion device. In contrast, in the electric propulsion device of the embodiment, the motor water jacket and the inverter water jacket are connected in series between the intake port and the drain port, so no branch passages or junction passages are required, and so that the structure for cooling the motor and the inverter using a water-cooling method can be simplified.

According to the present invention, each of the plurality of devices provided in the electric propulsion device can be efficiently cooled by the water-cooling method and cooling of the plurality of devices can be achieved by a simple structure.

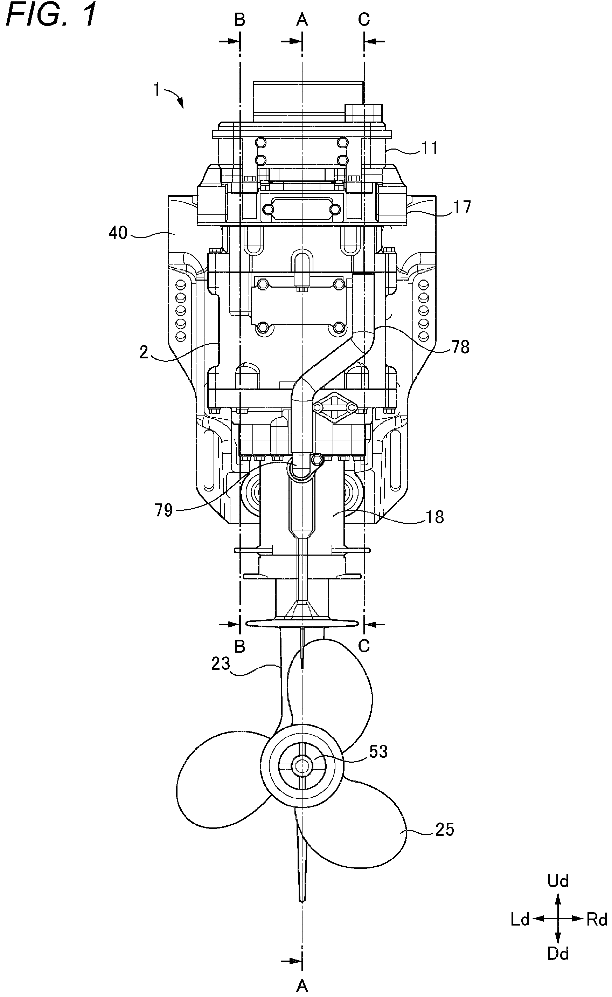

An example of an electric propulsion device according to the present invention will be described with reference to the drawings. In the following description, directions of up (Ud), down (Dd), front (Fd), back (Bd), left (Ld), and right (Rd) follow arrows drawn at the bottom right in Figs. 1 to 4, 6A, 7A, 7B, 8A, and 9.

### Outboard Motor

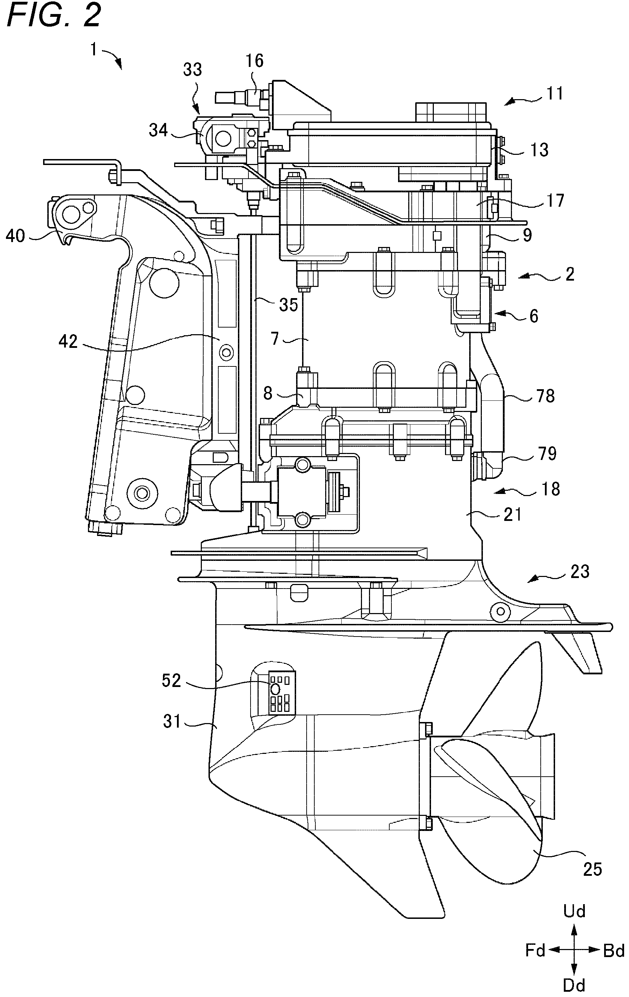

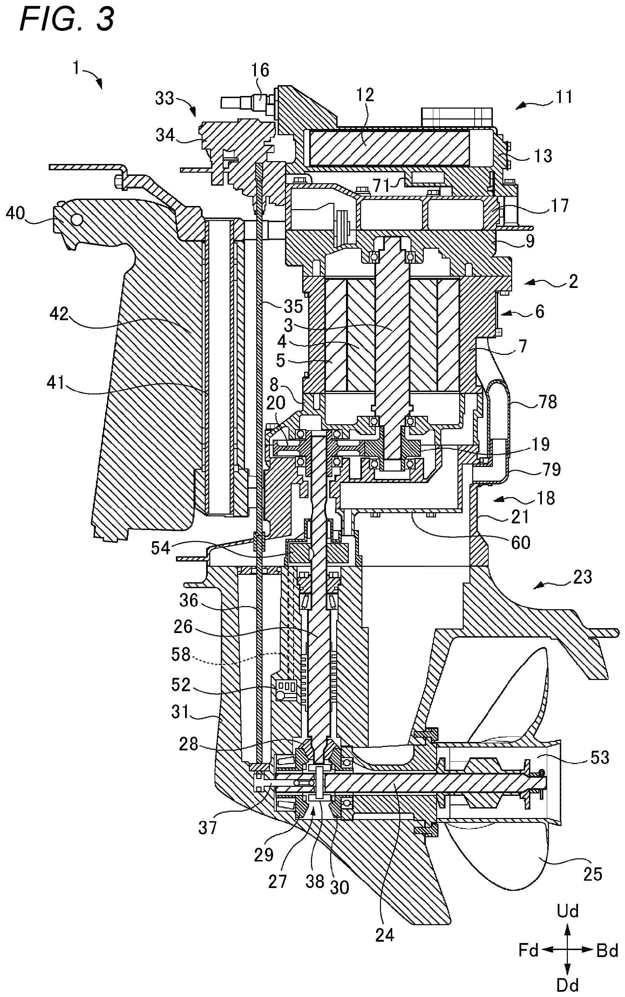

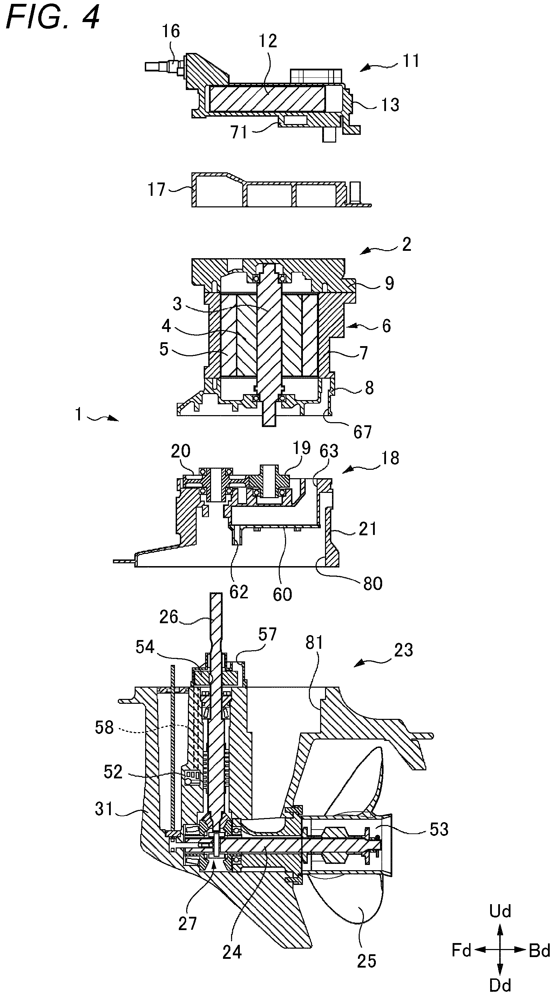

Fig. 1 illustrates an outboard motor 1 as an example of an electric propulsion device according to the present invention as viewed from behind. Fig. 2 illustrates the outboard motor 1 as viewed from the left. Fig. 3 illustrates a cross section of the outboard motor 1 cut along a line A-A in Fig. 1 as viewed from the left. Fig. 4 illustrates a motor 2, an inverter 11, an inverter mounting member 17, a speed reducer 18, and a lower unit 23 separated from each other in the outboard motor 1 in Fig. 3.

The outboard motor 1 is an electric outboard motor that includes a motor (electric motor) 2 as a power source and uses power of the motor 2 to generate thrust for a boat. As illustrated in Fig. 2, the outboard motor 1 includes the motor 2, the inverter 11, the speed reducer 18, and the lower unit 23.

The motor 2 is provided in an upper part of the outboard motor 1. When the outboard motor 1 is mounted on the boat, the motor 2 is positioned above the water surface. The motor 2 is, for example, a permanent magnet type AC synchronous motor. As illustrated in Fig. 3, the motor 2 includes an output shaft 3, a rotor 4, a stator 5, and a motor case 6. The motor 2 is mounted on the outboard motor 1 so that an extension direction of the output shaft 3 is a vertical direction. The rotor 4 is provided in an outer periphery of the output shaft 3, and the stator 5 is provided in an outer periphery of the rotor 4. As illustrated in Fig. 4, the motor case 6 includes a case body 7, a lower bracket 8, and an upper bracket 9. The case body 7 is formed in a cylindrical shape. The case body 7 accommodates a vertical middle part of the output shaft 3, the rotor 4, and the stator 5. The upper bracket 9 is provided above the case body 7 and closes the case body 7 from above. The lower bracket 8 is provided below the case body 7 and closes the case body 7 from below. The lower bracket 8 is provided with an insertion hole at the center. A lower end of the output shaft 3 protrudes downward through the insertion hole and is inserted into the speed reducer 18 from above the speed reducer 18 as illustrated in Fig. 3.

The inverter 11 is a device that controls driving of the motor 2. The inverter 11 is provided above the motor 2. The inverter 11 is fixed to an upper part of the upper bracket 9 of the motor case 6 via the inverter mounting member 17. The inverter 11 includes an inverter body 12, an inverter case 13, and a cable connection portion 16. The inverter body 12 is provided with a circuit that controls driving of the motor 2, and the circuit includes a power module. Although not illustrated, a cable is provided between the inverter body 12 and the motor 2 to electrically connect therebetween. The inverter body 12 is accommodated in the inverter case 13. The cable connection portion 16 is connected to a cable for supplying power from a battery (not illustrated) to the inverter body 12, a cable for transmitting control signals from a superior control module (not illustrated) to the inverter body 12, and the like.

The speed reducer 18 is a device that reduces rotation output from the motor 2 and transmits the rotation to a propeller 25. The speed reducer 18 is provided below the motor 2 in the upper part of the outboard motor 1. As illustrated in Fig. 4, the speed reducer 18 includes a drive gear 19, a driven gear 20, and a speed reducer case 21. As illustrated in Fig. 3, the drive gear 19 and the driven gear 20 are accommodated between the lower bracket 8 of the motor case 6 and the speed reducer case 21. The drive gear 19 and the driven gear 20 are aligned in a front-rear direction, and the driven gear 20 is disposed in front of the drive gear 19. The drive gear 19 is fixed to a lower end of the output shaft 3 of the motor 2. The driven gear 20 is fixed to an upper end of a transmission shaft 26. The drive gear 19 and the driven gear 20 mesh with each other. Rotation of the output shaft 3 is transmitted to the transmission shaft 26 via the drive gear 19 and the driven gear 20. The number of teeth of the driven gear 20 is greater than the number of teeth of the drive gear 19, and rotation of the output shaft 3 is reduced and transmitted to the transmission shaft 26. The drive gear 19 is a specific example of a "first gear", and the driven gear 20 is a specific example of a "second gear".

The lower unit 23 is provided at a lower part of the outboard motor 1 and is disposed below the speed reducer 18. The lower unit 23 includes a propeller shaft 24, the propeller 25, the transmission shaft 26, a gear mechanism 27, and a lower case 31. The propeller shaft 24 is provided at a lower part of the lower unit 23 and extends in the front-rear direction. The propeller 25 is fixed to a rear end of the propeller shaft 24. When the outboard motor 1 is mounted on the boat, the propeller 25 is positioned below the water surface. The transmission shaft 26 extends downward from the speed reducer 18, passes a front part in the lower unit 23, and reaches the lower part of the lower unit 23. The gear mechanism 27 is provided at a front part of the lower part in the lower unit 23. The gear mechanism 27 includes a transmission gear 28, a forward gear 29, and a reverse gear 30. The transmission gear 28, the forward gear 29, and the reverse gear 30 are bevel gears. The transmission gear 28 is fixed to a lower end of the transmission shaft 26. The forward gear 29 is disposed in front of the transmission gear 28 and meshes with the transmission gear 28. The reverse gear 30 is disposed behind the transmission gear 28 and meshes with the transmission gear 28. A front part of the propeller shaft 24, a lower part of the transmission shaft 26, and the gear mechanism 27 are accommodated in the lower case 31.

The outboard motor 1 also includes a shift mechanism 33. The shift mechanism 33 is a mechanism that changes a direction of thrust generated by the propeller 25 by changing a rotation direction of the propeller 25. As illustrated in Fig. 3, the shift mechanism 33 includes a shift actuator 34 disposed in front of the inverter 11, an upper shift rod 35 connected to the shift actuator 34 and extending downward from the shift actuator 34, a lower shift rod 36 connected to a lower end of the upper shift rod 35, extending downward from the lower end of the upper shift rod 35, and inserted into the lower case 31, a shift plunger 37 provided in the front part of the lower part of the lower case 31 and connected to a lower end of the lower shift rod 36, and a dog clutch 38 disposed between the forward gear 29 and the reverse gear 30 in the lower case 31 and connected to the shift plunger 37.

By driving the motor 2, the output shaft 3 rotates. Rotation of the output shaft 3 is transmitted to the transmission shaft 26 via the speed reducer 18, thereby rotating the transmission shaft 26. Upon rotation of the transmission shaft 26, the transmission gear 28 rotates, thereby rotating the forward gear 29 and the reverse gear 30. The forward gear 29 and the reverse gear 30 rotate in opposite directions to each other. The propeller shaft 24 extends through through holes provided in each of a center of the reverse gear 30 and a center of the forward gear 29, and is not in contact with both the reverse gear 30 and the forward gear 29. The dog clutch 38 is attached to the propeller shaft 24 to rotate integrally with the propeller shaft 24 and to be movable in the front-rear direction relative to the propeller shaft 24. By driving the shift actuator 34, the upper shift rod 35 and the lower shift rod 36 rotate, and rotation of the lower shift rod 36 is transmitted to the dog clutch 38 via the shift plunger 37, thereby moving the dog clutch 38 in the front-rear direction. When the dog clutch 38 moves forward, teeth on a front surface of the dog clutch 38 mesh with teeth provided on an inner periphery of a rear surface of the forward gear 29. As a result, rotation of the forward gear 29 is transmitted to the propeller shaft 24 via the dog clutch 38, the propeller shaft 24 and the propeller 25 rotate in one direction, and the propeller 25 generates thrust for moving the boat forward. Meanwhile, when the dog clutch 38 moves rearward, teeth on a rear surface of the dog clutch 38 mesh with teeth on an inner periphery of a front surface of the reverse gear 30. As a result, rotation of the reverse gear 30 is transmitted to the propeller shaft 24 via the dog clutch 38, the propeller shaft 24 and the propeller 25 rotate in another direction, and the propeller 25 generates thrust for moving the boat backward.

The outboard motor 1 also includes a clamp bracket 40 that mounts the outboard motor 1 to a transom of the boat, and a swivel bracket 42 that pivots the outboard motor 1 horizontally relative to the boat around a pilot shaft 41 as an axis and changes a direction of the propeller 25.

### Cooling Device

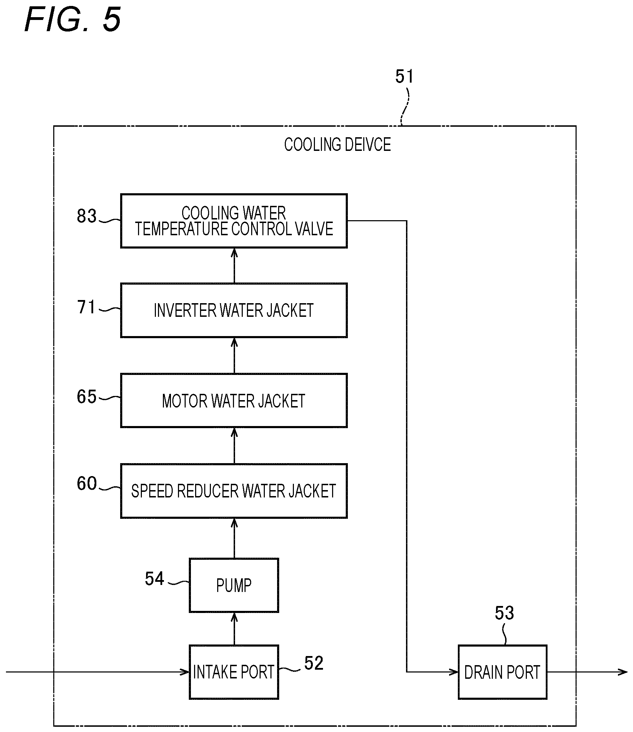

Fig. 5 illustrates a general configuration of a cooling device 51. The cooling device 51 is a water-cooled cooling device that cools a plurality of devices provided in the outboard motor 1, specifically, the speed reducer 18, the motor 2, and the inverter 11. As illustrated in Fig. 5, the cooling device 51 includes an intake port 52 that takes water around the outboard motor 1 into the outboard motor 1 as cooling water, a drain port 53 that discharges cooling water taken into the outboard motor 1 to around the outboard motor 1, and a pump 54 that flows cooling water from the intake port 52 to the drain port 53 in the outboard motor 1. The cooling device 51 includes a speed reducer water jacket 60 that cools the speed reducer 18 with cooling water taken into the outboard motor 1, a motor water jacket 65 that cools the motor 2 with cooling water taken into the outboard motor 1, and an inverter water jacket 71 that cools the inverter 11 with cooling water taken into the outboard motor 1. The cooling device 51 includes a cooling water temperature control valve 83 that controls temperature of cooling water flowing in the outboard motor 1.

The speed reducer water jacket 60, the motor water jacket 65, and the inverter water jacket 71 are connected in series between the intake port 52 and the drain port 53 in the outboard motor 1 from the intake port 52 to the drain port 53 in the order of the speed reducer water jacket 60, the motor water jacket 65, and the inverter water jacket 71. The pump 54 is connected in front of the series arrangement of the three water jackets 60, 65, and 71, specifically, between the intake port 52 and the speed reducer water jacket 60. The cooling water temperature control valve 83 is connected behind the series arrangement of the three water jackets 60, 65, and 71, specifically, between the inverter water jacket 71 and the drain port 53.

The cooling water taken into the outboard motor 1 from the intake port 52 is supplied to the speed reducer water jacket 60 by driving the pump 54, and flows in the speed reducer water jacket 60. Accordingly, the speed reducer 18 is cooled. Subsequently, the cooling water flowed in the speed reducer water jacket 60 is discharged from the speed reducer water jacket 60, and is then supplied to the motor water jacket 65 and flows in the motor water jacket 65. Accordingly, the motor 2 is cooled. Subsequently, the cooling water flowed in the motor water jacket 65 is discharged from the motor water jacket 65, and is then supplied to the inverter water jacket 71 and flows in the inverter water jacket 71. Accordingly, the inverter 11 is cooled. Subsequently, the cooling water flowed in the inverter water jacket 71 is discharged from the inverter water jacket 71 and is then discharged from the drain port 53 to around the outboard motor 1.

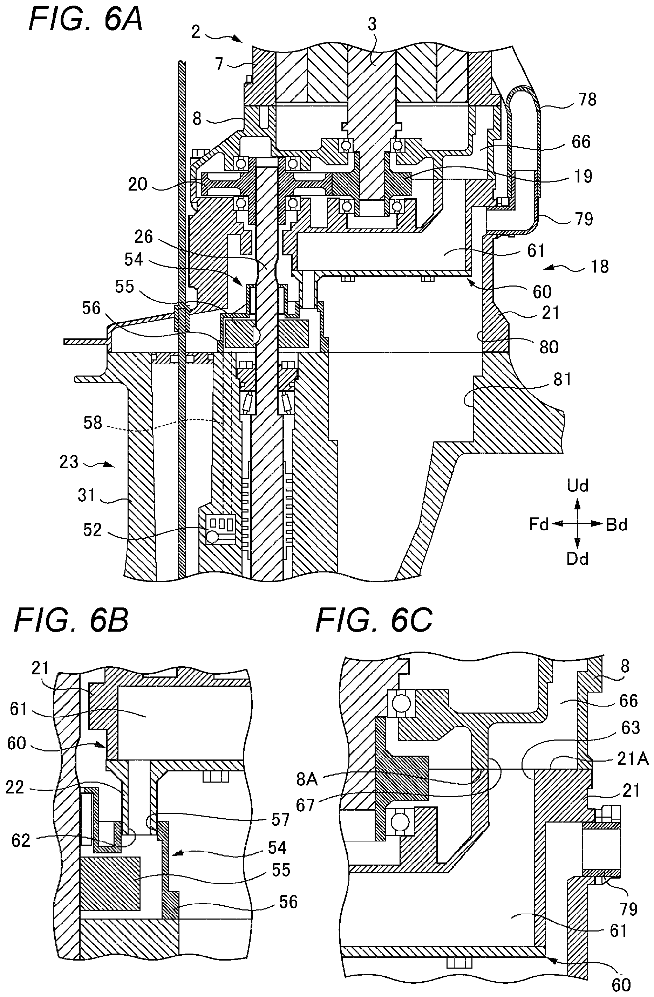

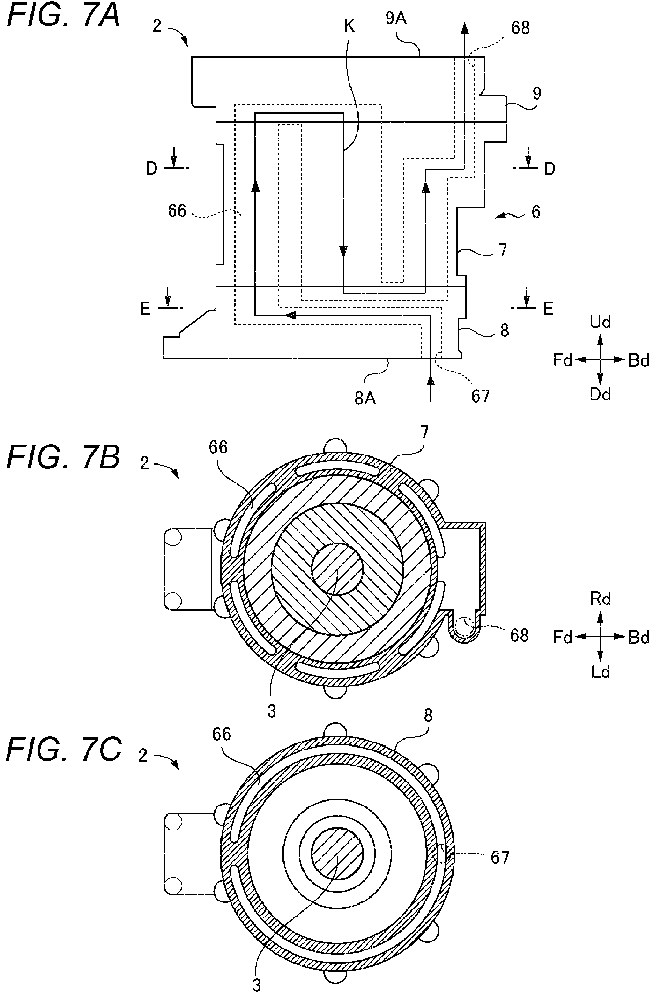

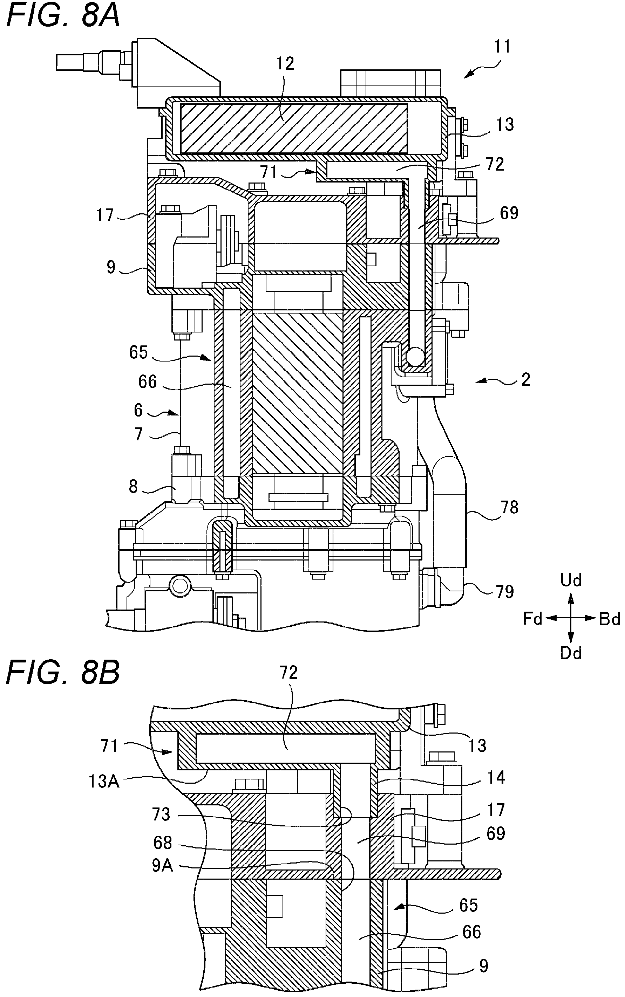

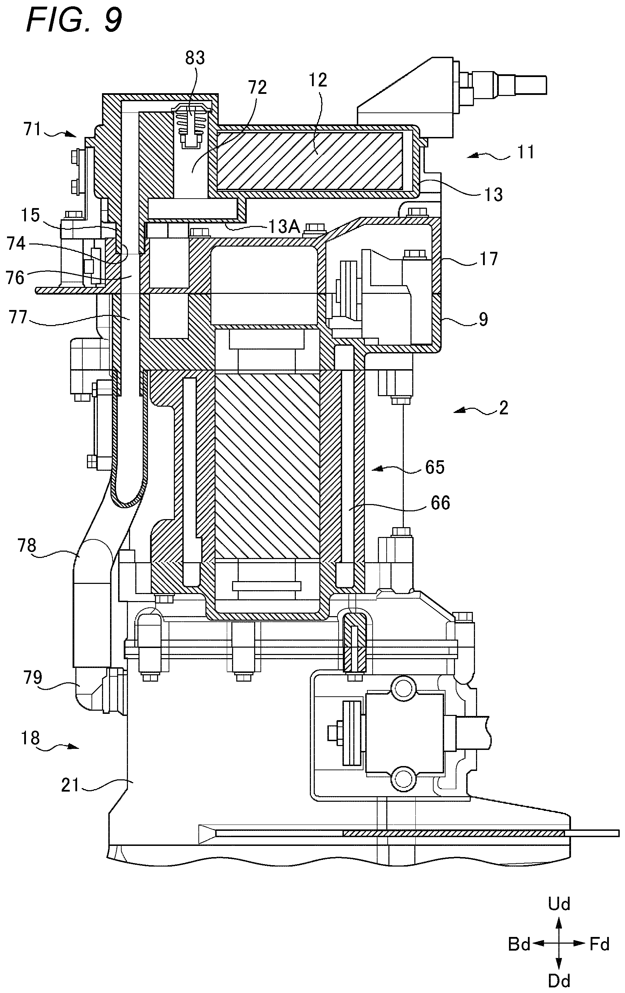

A configuration of each portion of the cooling device 51 will be described in detail below with reference to Figs. 6A to 9. Fig. 6A illustrates an enlarged view of a portion of the outboard motor 1 in Fig. 3 including the intake port 52, the pump 54, and the speed reducer water jacket 60. Fig. 6B illustrates an enlarged view of a portion of the outboard motor 1 in Fig. 6A from the pump 54 to the speed reducer water jacket 60. Fig. 6C illustrates an enlarged view of a portion of the outboard motor 1 in Fig. 6A from the speed reducer water jacket 60 to the motor water jacket 65. Fig. 7A illustrates a schematic configuration of the motor water jacket 65. Fig. 7B illustrates a cross section of the motor 2 cut along a line D-D in Fig. 7A as viewed from above. Fig. 7C illustrates a cross section of the motor 2 cut along a line E--E in Fig. 7A as viewed from above. Fig. 8A illustrates a cross section of the outboard motor 1 cut along a line B-B in Fig. 1 as viewed from the left. Fig. 8B illustrates an enlarged view of a portion of the outboard motor 1 in Fig. 8A from the motor water jacket 65 to the inverter water jacket 71. Fig. 9 illustrates a cross section of the outboard motor 1 cut along a line C-C in Fig. 1 as viewed from the right.

### Intake Port and Pump

As illustrated in Fig. 2 and Fig. 6A, each intake port 52 is provided in a front part of a left part of the lower case 31 and in a front part of a right part of the lower case 31. Each intake port 52 is a hole opened on an outer surface of the lower case 31. When the outboard motor 1 is mounted on the boat, each intake port 52 is positioned below the water surface. Each intake port 52 is provided with a strainer for preventing dust and other particles in the water from being taken into the outboard motor 1.

As illustrated in Fig. 6A, the pump 54 is disposed below a front part of the speed reducer 18. The pump 54 is, for example, a rotary variable displacement water pump. The pump 54 includes an impeller 55 and a pump case 56. The impeller 55 is fixed to the transmission shaft 26 and rotates integrally with the transmission shaft 26. The impeller 55 is accommodated in the pump case 56. The pump case 56 is attached to an upper part of the lower unit 23.

Although not illustrated in detail, a suction port is provided in a lower part of the pump case 56. An intake passage 58 is provided in the lower unit 23. Each intake port 52 and the suction port are connected to each other via the intake passage 58. The water taken in from each intake port 52 flows into the pump case 56 through the intake passage 58 and the suction port as cooling water. As illustrated in Fig. 6B, a discharge port 57 is provided in an upper part of the pump case 56. For example, the discharge port 57 opens on an upper surface of a rear part of the pump case 56. Cooling water in the pump case 56 flows out of the pump case 56 through the discharge port 57.

### Speed Reducer Water Jacket

As illustrated in Fig. 6A, the speed reducer water jacket 60 is provided in the speed reducer case 21. Specifically, the speed reducer water jacket 60 is configured of a cooling water passage 61 formed in the speed reducer case 21. The speed reducer water jacket 60 is provided in the speed reducer case 21 in a portion extending from below the drive gear 19 to below the driven gear 20, and extends in the front-rear direction from below the drive gear 19 to below the driven gear 20.

As illustrated in Fig. 6B, one end of the speed reducer water jacket 60 (one end of the cooling water passage 61) is provided with an inlet port 62 that connects inside of the speed reducer water jacket 60 to outside of the speed reducer water jacket 60 and flows cooling water from outside of the speed reducer water jacket 60 to inside of the speed reducer water jacket 60. The inlet port 62 is disposed in a front end of the speed reducer water jacket 60. The inlet port 62 is disposed at a position opposite to the discharge port 57 of the pump 54 in the vertical direction. Specifically, the inlet port 62 is disposed in a lower end of an inlet tube portion 22 that protrudes downward from a portion of a lower surface of the speed reducer case 21 that faces the discharge port 57. The lower end of the inlet tube portion 22 is inserted into the discharge port 57 of the pump 54. Accordingly, the inlet port 62 is directly connected to the discharge port 57. The cooling water flowed out of the discharge port 57 passes through inside of the inlet port 62 and the inlet tube portion 22 and flows into the speed reducer water jacket 60.

As illustrated in Fig. 6C, the other end of the speed reducer water jacket 60 (the other end of the cooling water passage 61) is provided with an outlet port 63 that connects inside of the speed reducer water jacket 60 to outside of the speed reducer water jacket 60 and flows cooling water from inside of the speed reducer water jacket 60 to outside of the speed reducer water jacket 60. The outlet port 63 is disposed in a left-right direction center part of an upper part of a rear part of the speed reducer 18. The outlet port 63 is disposed behind the drive gear 19. The outlet port 63 is provided on an upper surface 21A of the speed reducer case 21. The outlet port 63 is disposed in a rear end of the speed reducer water jacket 60. Cooling water in the speed reducer water jacket 60 flows out of the speed reducer water jacket 60 through the outlet port 63.

### Motor Water Jacket

The motor water jacket 65 is provided in the motor case 6. Specifically, the motor water jacket 65 is configured of a cooling water passage 66 formed in the motor case 6 as illustrated in Figs. 7A to 7C. A portion of the cooling water passage 66 is formed in the lower bracket 8, another portion of the cooling water passage 66 is formed in the case body 7, and still another portion of the cooling water passage 66 is formed in the upper bracket 9. The cooling water passage 66 is provided to surround the entire periphery of the stator 5 of the motor 2 from an outer periphery thereof.

One end of the motor water jacket 65 (one end of the cooling water passage 66) is provided with an inlet port 67 that connects inside of the motor water jacket 65 to outside of the motor water jacket 65 and flows cooling water from outside of the motor water jacket 65 to inside of the motor water jacket 65. As can be seen from Figs. 7A and 7C, the inlet port 67 is disposed in a left-right center part of a lower part of a rear part of the motor 2. As illustrated in Fig. 6C, the inlet port 67 is provided on a lower surface 8A of the lower bracket 8. The inlet port 67 is disposed in a position opposite to the outlet port 63 of the speed reducer water jacket 60 in the vertical direction. In the outboard motor 1, the speed reducer 18 and the motor 2 are adjacent to each other in the vertical direction, and the upper surface 21A of the speed reducer case 21 and the lower surface 8A of the lower bracket 8 face each other. A portion of the upper surface 21A of the speed reducer case 21 where the outlet port 63 is provided and a portion of the lower surface 8A of the lower bracket 8 where the inlet port 67 is provided are in contact with each other, thereby connecting the outlet port 63 to the inlet port 67. Cooling water flowed out of the outlet port 63 of the speed reducer water jacket 60 flows into the motor water jacket 65 through the inlet port 67 of the motor water jacket 65. Cooling water flows in the motor water jacket 65 as indicated by an arrow K in Fig. 7A.

The other end of the motor water jacket 65 (the other end of the cooling water passage 66) is provided with an outlet port 68 that connects inside of the motor water jacket 65 to outside of the motor water jacket 65 and flows cooling water from inside of the motor water jacket 65 to outside of the motor water jacket 65. The outlet port 68 is disposed in a left part of an upper part of the rear part of the motor 2 as can be seen in Figs. 7A and 7B. As illustrated in Fig. 8B, the outlet port 68 is provided on an upper surface 9A of the upper bracket 9. Cooling water in the motor water jacket 65 flows out of the motor water jacket 65 through the outlet port 68.

As illustrated in Fig. 8B, a connecting passage 69 is provided in a rear left part of the inverter mounting member 17 and passes through the inverter mounting member 17 in the vertical direction. A lower end of the connecting passage 69 opens on a lower surface of the inverter mounting member 17 and an upper end of the connecting passage 69 opens on an upper surface of the inverter mounting member 17. An opening portion on a lower end side of the connecting passage 69 is disposed at a position opposite to the outlet port 68 of the motor water jacket 65 in the vertical direction. In the outboard motor 1, the motor 2 and the inverter mounting member 17 are adjacent to each other in the vertical direction, and the upper surface 9A of the upper bracket 9 of the motor case 6 and the lower surface of the inverter mounting member 17 face each other. A portion of the upper surface 9A of the upper bracket 9 where the outlet port 68 is provided and a portion of the lower surface of the inverter mounting member 17 where the opening portion on the lower end side of the connecting passage 69 is provided are in contact with each other, thereby connecting the outlet port 68 to the connecting passage 69.

### Inverter Water Jacket

As illustrated in Fig. 8A, the inverter water jacket 71 is provided in the inverter case 13. Specifically, the inverter water jacket 71 is configured of a cooling water passage 72 formed in the inverter case 13. The inverter water jacket 71 is formed in a lower part of a rear part of the inverter case 13. The inverter water jacket 71 extends in the left-right direction from a left end to a right end of the inverter case 13.

As illustrated in Fig. 8B, one end of the inverter water jacket 71 (one end of the cooling water passage 72) is provided with an inlet port 73 that connects inside of the inverter water jacket 71 to outside of the inverter water jacket 71 and flows cooling water from outside of the inverter water jacket 71 to inside of the inverter water jacket 71. The inlet port 73 is disposed in a left end of the lower part of the rear part of the inverter case 13. The inlet port 73 is disposed in a left end of the inverter water jacket 71. The inlet port 73 is provided on a lower surface 13A of the inverter case 13. Specifically, an inlet tube portion 14 that protrudes downward is provided on the lower surface 13A of the inverter case 13, and the inlet port 73 is disposed in a lower end of the inlet tube portion 14. The inlet tube portion 14 and the inlet port 73 are disposed at a position facing the outlet port 68 of the motor water jacket 65 in the vertical direction. The inlet tube portion 14 and the inlet port 73 face an opening portion on an upper end side of the connecting passage 69 that extends vertically from the outlet port 68 in the vertical direction. The lower end of the inlet tube portion 14 is inserted into the opening portion on the upper end side of the connecting passage 69. As a result, the inlet port 73 is directly connected to the connecting passage 69. Cooling water flowed out of the outlet port 68 of the motor water jacket 65 flows in the connecting passage 69, the inlet port 73 and the inlet tube portion 14 and flows into the inverter water jacket 71.

The cooling water passage 72 of the inverter water jacket 71 extends in the left-right direction from a left end to a right end of the inverter case 13, then extends upward from the right end of the inverter case 13, then extends rearward, and then extends downward as illustrated in Fig. 9.

The other end of the inverter water jacket 71 (the other end of the cooling water passage 72) is provided with an outlet port 74 that connects inside of the inverter water jacket 71 to outside of the inverter water jacket 71 and flows cooling water from inside of the inverter water jacket 71 to outside of the inverter water jacket 71. The outlet port 74 is disposed in a right end of the lower part of the rear part of the inverter case 13. The outlet port 74 is disposed in a right end of the inverter water jacket 71. The outlet port 74 is provided on the lower surface 13A of the inverter case 13. Specifically, an outlet tube portion 15 that protrudes downward is provided on the lower surface 13A of the inverter case 13, and the outlet port 74 is disposed in a lower end of the outlet tube portion 15. Cooling water in the inverter water jacket 71 flows out of the inverter water jacket 71 through the outlet port 74.

### Configuration Regarding Drainage

As illustrated in Fig. 3, the drain port 53 is provided in a hub of the propeller 25. The outboard motor 1 is provided with a connecting passage 76, a connecting passage 77, a drain tube 78, a drain passage 80, and a drain passage 81 as passages for carrying cooling water flowed out of the outlet port 68 of the inverter water jacket 71 to the drain port 53.

As illustrated in Fig. 9, the connecting passage 76 is provided in a rear right part of the inverter mounting member 17. The connecting passage 76 extends in the vertical direction, an opening portion on an upper end side of the connecting passage 76 opens on the upper surface of the inverter mounting member 17, and an opening portion on a lower end side of the connecting passage 76 opens on the lower surface of the inverter mounting member 17. A lower end of the outlet tube portion 15 of the inverter water jacket 71 is inserted into the opening portion on the upper end side of the connecting passage 76, thereby connecting the outlet port 74 of the inverter water jacket 71 to the connecting passage 76.

As illustrated in Fig. 9, the connecting passage 77 is provided in a rear right part of the upper bracket 9 of the motor case 6. The connecting passage 77 extends in the vertical direction, an opening portion on an upper end side of the connecting passage 77 opens on an upper surface of the upper bracket 9, and an opening portion on a lower end side of the connecting passage 77 opens on a lower surface of the upper bracket 9.

The opening portion on the upper end side of the connecting passage 77 faces the opening portion on the lower end side of the connecting passage 76 in the vertical direction. A portion of the inverter mounting member 17 where the opening portion on the lower end side of the connecting passage 76 is provided and a portion of the upper bracket 9 where the opening portion on the upper end side of the connecting passage 77 is provided are in contact with each other, thereby connecting the connecting passages 76 and 77 to each other.

As illustrated in Fig. 9, an upper end of the drain tube 78 is connected to the lower end of the connecting passage 77. The drain tube 78 extends downward from the connecting passage 77 provided at the rear right part of the upper bracket 9 of the motor case 6, as illustrated in Fig. 1, then bends to the lower left, then extends to the lower left, then bends downward, and then extends downward. A lower end of the drain tube 78 is positioned in a center of the outboard motor 1 in the left-right direction. As illustrated in Fig. 6A, the lower end of the drain tube 78 is connected to a rear part of the speed reducer case 21 via a joint 79. As can be seen from Figs. 6A and 9, the drain tube 78 passes a position outside the motor 2 and spaced apart from the motor 2.

As illustrated in Fig. 6A, the drain passage 80 is provided in the rear part in the speed reducer case 21. The drain tube 78 communicates with the drain passage 80 via the joint 79. The drain passage 81 is provided in a rear part in the lower case 31. The drain passage 81 communicates with the drain passage 80. Although not illustrated in detail, the drain passage 81 communicates with the drain port 53 in the lower case 31.

The cooling water flowed out of the outlet port 68 of the inverter water jacket 71 sequentially passes the connecting passage 76, the connecting passage 77, the drain tube 78, the drain passage 80, and the drain passage 81, and is discharged from the drain port 53 to around the outboard motor 1.

### Cooling Water Temperature Control Valve

As illustrated in Fig. 9, the cooling water temperature control valve 83 is provided at the other end (terminal end) of the cooling water passage 72 of the inverter water jacket 71. The cooling water temperature control valve 83 changes a valve opening degree according to a temperature of cooling water flowing in the terminal end of the cooling water passage 72 configuring the inverter water jacket 71, thereby changing an amount of cooling water flowing out of the outlet port 74 of the inverter water jacket 71. For example, the higher the temperature of the cooling water flowing in the terminal end of the cooling water passage 72, the larger the valve opening degree of the cooling water temperature control valve 83, thereby increasing an amount of the cooling water flowing out of the outlet port 74 of the inverter water jacket 71. The cooling water temperature control valve 83 may be, for example, a thermostat.

The cooling water temperature control valve 83 can adjust the temperature of the cooling water flowing in the outboard motor 1 according to a total amount of heat generated by a plurality of devices in the outboard motor 1 to be cooled by the cooling device 51. That is, in the outboard motor 1, the cooling water taken in from the intake port 52 flows in the speed reducer water jacket 60, then flows in the motor water jacket 65, then flows in the inverter water jacket 71, and is then discharged from the drain port 53. Therefore, the cooling water flowing in the terminal end of the cooling water passage 72 of the inverter water jacket 71 is heated by heat generated by each of the plurality of devices in the outboard motor 1 to be cooled by the cooling device 51, specifically, the speed reducer 18, the motor 2, and the inverter 11. Therefore, the total amount of heat generated by the plurality of devices in the outboard motor 1 to be cooled by the cooling device 51 can be estimated based on the temperature of the cooling water flowing in the terminal end of the cooling water passage 72. By changing the amount of the cooling water flowing out of the outlet port 74 of the inverter water jacket 71, the amount of cooling water flowing in the outboard motor 1, specifically, the amount of cooling water flowing in the speed reducer water jacket 60, the motor water jacket 65, and the inverter water jacket 71 can be changed. By changing the amount of the cooling water flowing in the outboard motor 1, the temperature of the cooling water flowing in the outboard motor 1 can be adjusted. Specifically, by increasing the amount of the cooling water flowing in the outboard motor 1, the temperature of the cooling water flowing in the outboard motor 1 can be lowered. Therefore, by changing the amount of the cooling water flowing out of the outlet port 74 of the inverter water jacket 71 according to the temperature of the cooling water flowing in the terminal end of the cooling water passage 72 of the inverter water jacket 71, it is possible to control the temperature of the cooling water flowing in the outboard motor 1 according to the total amount of heat generated by the plurality of devices in the outboard motor 1 to be cooled by the cooling device 51.

As described above, the outboard motor 1 of the example of the present invention includes the speed reducer water jacket 60, the motor water jacket 65, and the inverter water jacket 71, and the three water jackets 60, 65, and 71 are connected in series between the intake port 52 and the drain port 53. Accordingly, the speed reducer 18, the motor 2, and the inverter 11 can be efficiently cooled by a water-cooling method, and cooling of the speed reducer 18, the motor 2, and the inverter 11 can be realized by a simple structure.

When the three water jackets 60, 65, and 71 were to be connected in parallel between the intake port 52 and the drain port 53, since branch passages for distributing the cooling water taken in from the intake port 52 to each of the three water jackets 60, 65, and 71 or junction passages for merging the cooling water after flowing in each of the three water jackets 60, 65, and 71 and carrying the merged cooling water to the drain port 53 are required, a structure of the outboard motor may become complicated by providing such branch passages and junction passages in the outboard motor. In contrast, in the outboard motor 1 of the example, the three water jackets 60, 65, and 71 are connected in series between the intake port 52 and the drain port 53, so no branch passages or junction passages are required. Therefore, a structure for efficiently cooling each of the speed reducer 18, the motor 2, and the inverter 11 by a water-cooling method can be simplified.

In the outboard motor 1 of the example, the speed reducer water jacket 60, the motor water jacket 65, and the inverter water jacket 71 are arranged in a straight line from bottom to top of the outboard motor 1 as a whole. Accordingly, a layout of the passages for flowing the cooling water in the three water jackets 60, 65, and 71 can be simplified. Therefore, the cooling water can sequentially and smoothly flow in the three water jackets 60, 65, and 71, thereby enhancing cooling efficiency for the speed reducer 18, the motor 2 and the inverter 11.

In the outboard motor 1 of the example, the outlet port 68 of the motor water jacket 65 is provided on the upper surface 9A of the upper bracket 9 of the motor case 6, the inlet port 73 of the inverter water jacket 71 is provided on the lower surface 13A of the inverter case 13, and the outlet port 68 of the motor water jacket 65 and the inlet port 73 of the inverter water jacket 71 face each other in the vertical direction. Accordingly, a connection structure between the motor water jacket 65 and the inverter water jacket 71 can be simplified. A cooling water passage connecting the motor water jacket 65 to the inverter water jacket 71 can be shortened, and cooling water can smoothly flow.

In the outboard motor 1 of the example, the motor 2 and the inverter mounting member 17 are adjacent to each other in the vertical direction, the inverter mounting member 17 and the inverter 11 are adjacent to each other in the vertical direction, the connecting passage 69 is provided in the inverter mounting member 17, and a portion of the upper surface 9A of the upper bracket 9 of the motor case 6 where the outlet port 68 is provided is brought into contact with a portion of the lower surface of the inverter mounting member 17 where the opening portion on the lower end side of the connecting passage 69 is provided so that the outlet port 68 is connected to the connecting passage 69, and the connecting passage 69 is connected to the inlet port 73 by inserting the lower end of the inlet tube portion 14 of the inverter case 13 into the opening portion on the upper end side of the connecting passage 69 provided on the upper surface of the inverter mounting member 17. By such configuration, a connection structure between the motor water jacket 65 and the inverter water jacket 71 can be simplified. In manufacture of the outboard motor 1, the motor water jacket 65 can be easily connected to the inverter water jacket 71. Specifically, by simply attaching the inverter mounting member 17 to the motor 2 and mounting the inverter 11 on the inverter mounting member 17, the outlet port 68 of the motor water jacket 65 can be connected to the inlet port 73 of the inverter water jacket 71 via the connecting passage 69. According to such connection method, it is easier to connect the outlet port 68 to the inlet port 73 than, for example, a method of connecting the outlet port 68 to the inlet port 73 using a hose.

In the outboard motor 1 of the example, the inverter 11 is disposed above the motor 2, and the inverter water jacket 71 is provided below the inverter case 13. By such configuration, the inverter water jacket 71 and the motor water jacket 65 can be brought close to each other, and the cooling water passage connecting the motor water jacket 65 to the inverter water jacket 71 can be shortened. Therefore, cooling water can smoothly flow.

In the outboard motor 1 of the example, the outlet port 63 of the speed reducer water jacket 60 is provided on the upper surface 21A of the speed reducer case 21, the inlet port 67 of the motor water jacket 65 is provided on the lower surface 8A of the lower bracket 8 of the motor case 6, and the outlet port 63 of the speed reducer water jacket 60 and the inlet port 67 of the motor water jacket 65 face each other in the vertical direction. Accordingly, a connection structure between the speed reducer water jacket 60 and the motor water jacket 65 can be simplified. The cooling water passage connecting the speed reducer water jacket 60 to the motor water jacket 65 can be shortened, and cooling water can smoothly flow.

In the outboard motor 1 of the example, the speed reducer 18 and the motor 2 are adjacent to each other in the vertical direction, and the outlet port 63 is connected to the inlet port 67 by bringing a portion of the upper surface 21A of the speed reducer case 21 where the outlet port 63 is provided into contact with a portion of the lower surface 8A of the upper bracket 9 of the motor case 6 where the inlet port 67 is provided. By such configuration, a connection structure between the speed reducer water jacket 60 and the motor water jacket 65 can be simplified. In manufacture of the outboard motor 1, the speed reducer water jacket 60 can be easily connected to the motor water jacket 65. Specifically, by simply mounting the motor 2 on the speed reducer 18, the outlet port 63 of the speed reducer water jacket 60 can be connected to the inlet port 67 of the motor water jacket 65. According to such connection method, it is easier to connect the outlet port 63 to the inlet port 67 than, for example, a method of connecting the outlet port 63 to the inlet port 67 using a hose.

In the speed reducer 18 of the outboard motor 1 of the example, the speed reducer water jacket 60 is provided in a portion extending from below the drive gear 19 to below the driven gear 20. Accordingly, it us possible to improve cooling efficiency for both the drive gear 19 and the driven gear 20.

In the outboard motor 1 of the example, the pump 54 is disposed below the speed reducer 18, and the inlet port 62 of the speed reducer water jacket 60 faces the discharge port 57 provided in the pump case 56 of the pump 54. Accordingly, a connection structure between the pump 54 and the speed reducer water jacket 60 can be simplified. The cooling water passage connecting the pump 54 to the speed reducer water jacket 60 can be shortened, and cooling water can smoothly flow.

In the outboard motor 1 of the example, the inlet tube portion 22 of the speed reducer case 21 is inserted into the discharge port 57 of the pump 54 so that the discharge port 57 of the pump 54 is connected to the inlet port 62 of the speed reducer water jacket 60. By such configuration, a connection structure between the pump 54 and the speed reducer water jacket 60 can be simplified. In manufacture of the outboard motor 1, the pump 54 and the speed reducer water jacket 60 can be easily connected. Specifically, the pump 54 can be connected to the speed reducer water jacket 60 by simply mounting the speed reducer 18 on the lower unit 23.

The outboard motor 1 of the example is provided with the drain tube 78 that carries cooling water flowed out of the outlet port 74 of the inverter water jacket 71 to the drain port 53, and the drain tube 78 passes a position outside the motor 2 and spaced apart from the motor 2. Since the drain tube 78 passes a position spaced apart from the motor 2, it is possible to prevent the temperature of the motor 2 from rising due to heated cooling water flowing in the drain tube 78.

In the outboard motor 1 of the example, the speed reducer water jacket 60, the motor water jacket 65, and the inverter water jacket 71 are sequentially arranged from the intake port 52 toward the drain port 53. The outboard motor 1 includes the cooling water temperature control valve 83 that changes the amount of cooling water flowing out of the inverter water jacket 71 according to the temperature of the cooling water flowing in the terminal end of the cooling water passage 72 configuring the inverter water jacket 71 as a final stage of the three water jackets 60, 65, and 71 provided on the outboard motor 1. By the outboard motor 1 having such configuration, it is possible to realize control of the temperature of the cooling water flowing in the outboard motor 1 according to the total amount of heat generated by the speed reducer 18, the motor 2, and the inverter 11 with a simple configuration.

The outboard motor 1 of the example has a configuration in which a rotation direction of the propeller 25 is switched by using the shift mechanism 33 to switch between transmitting the rotation of the motor 2 to the propeller shaft 24 via the forward gear 29 and transmitting the rotation of the motor 2 to the propeller shaft 24 via the reverse gear 30. According to such configuration, even when a rotation direction of the motor 2 is always constant, the rotation direction of the propeller 25 can be changed, and a forward or rearward direction of thrust generated by the outboard motor 1 can be changed. Accordingly, a rotation direction of the impeller 55 of the pump 54 fixed to the transmission shaft 26 is always constant, thereby extending a lifespan of the impeller 55. In other words, unlike an internal combustion engine, a motor can easily change a rotation direction of an output shaft thereof by drive control, so a rotation direction of a propeller can be changed by changing the rotation direction of the output shaft of the motor by drive control of the motor. However, in the outboard motor 1 of the example, the impeller 55 of the pump 54 is fixed to the transmission shaft 26 that transmits the rotation of the output shaft 3 of the motor 2 to the propeller 25. Therefore, when the rotation direction of the propeller 25 is changed by changing the rotation direction of the output shaft 3 of the motor 2, the rotation direction of the impeller 55 also changes when the rotation direction of the motor 2 is changed. When the impeller 55 is made of rubber, for example, the impeller 55 is significantly deformed when the rotation direction of the impeller 55 is switched. When large deformation of the impeller 55 is repeated as such, the impeller 55 is easily damaged, and the lifespan of the impeller 55 is shortened. According to the outboard motor 1 of the example, the rotation direction of the impeller 55 can be always constant so that large deformation of the impeller 55 can be prevented and the lifespan of the impeller 55 can be extended.

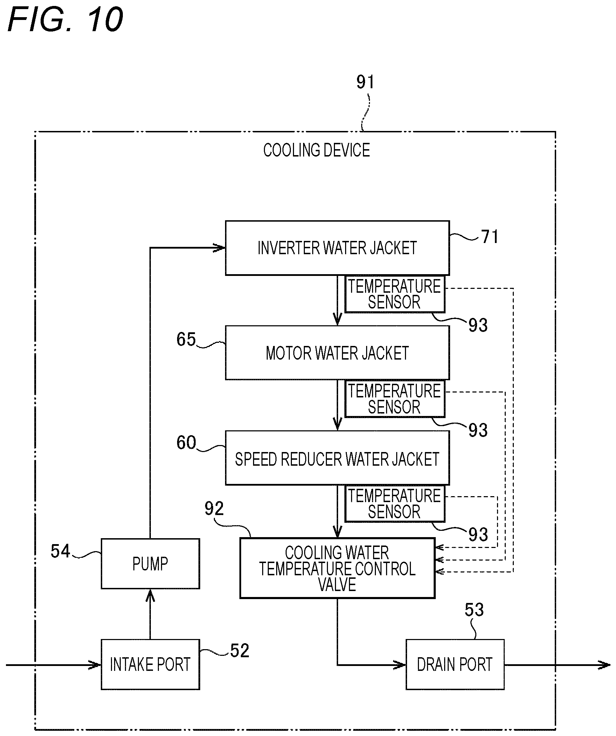

In the cooling device 51 of the outboard motor 1 of the above-described example, the speed reducer water jacket 60, the motor water jacket 65, and the inverter water jacket 71 are connected in series from the intake port 52 to the drain port 53 in the order of the speed reducer water jacket 60, the motor water jacket 65, and the inverter water jacket 71, but the present invention is not limited thereto. As in a cooling device 91 illustrated in Fig. 10, the speed reducer water jacket 60, the motor water jacket 65, and the inverter water jacket 71 may be connected in series from the intake port 52 to the drain port 53 in the order of the inverter water jacket 71, the motor water jacket 65, and the speed reducer water jacket 60. Here, it is preferable to connect the pump 54 between the intake port 52 and the inverter water jacket 71. It is preferable to connect a cooling water temperature control valve 92 between the speed reducer water jacket 60 and the drain port 53.

For example, as illustrated in Fig. 10, temperature sensors 93 that detect the temperature of the cooling water may be provided in each of the inverter water jacket 71, the motor water jacket 65, and the speed reducer water jacket 60, and a valve opening degree of the cooling water temperature control valve 92 may be changed based on the cooling water temperatures detected by the temperature sensors 93.

**In** the outboard motor 1 of the above-described example, when the motor 2 is provided above the speed reducer 18, the lower bracket 8 of the motor case 6 is provided on the upper surface 21A of the speed reducer case 21 and the upper surface 21A and the lower surface 8A are in contact with each other, but a sealing member such as a gasket may be provided between the upper surface 21A and the lower surface 8A. That is, a sealing member may be provided on the upper surface 21A of the speed reducer case 21 and the lower bracket 8 may be provided on the sealing member. Here, a hole is provided in the sealing member to communicate the outlet port 63 of the speed reducer water jacket 60 with the inlet port 67 of the motor water jacket 65. In the outboard motor 1 of the above-described example, when the inverter mounting member 17 is provided above the motor 2, the inverter mounting member 17 is provided on the upper surface 9A of the upper bracket 9 of the motor case 6 and the upper surface 9A and the lower surface of the inverter mounting member 17 are in contact with each other, but a sealing member such as a gasket may be provided between the upper surface 9A and the lower surface of the inverter mounting member 17. That is, a sealing member may be provided on the upper surface 9A of the upper bracket 9 and the inverter mounting member 17 may be provided on the sealing member. Here, a hole is provided in the sealing member to communicate the outlet port 68 of the motor water jacket 65 with the connecting passage 69.

In the above-described example, the inverter 11 is provided above the motor 2 with the inverter mounting member 17 interposed therebetween, but the inverter 11 may be provided directly above the motor 2.

The present invention can also be applied to an electric outboard motor that does not include a speed reducer water jacket. The present invention can also be applied to other types of electric propulsion devices such as electric inboard/outboard motors.

The present invention can be modified as appropriate without departing from the spirit or the concept of the invention as can be read from the entire specification, and electric propulsion devices incorporating such modifications are also included in the technical concept of the present invention.

## Claims

1. An electric propulsion device (1) for propelling a boat, the electric propulsion device comprising:
a propeller (25) provided in a lower part of the electric propulsion device and configured to generate thrust for the boat;
a motor (2) provided in an upper part of the electric propulsion device and configured to rotate the propeller;
an inverter (11) provided above the motor and configured to control driving of the motor; and
a cooling device (51, 91) configured to cool the motor and the inverter, wherein
the cooling device includes
an intake port (52) configured to take water around the electric propulsion device into the electric propulsion device as cooling water,
a drain port (53) configured to discharge the cooling water taken into the electric propulsion device to around the electric propulsion device,
a pump (54) configured to flow the cooling water from the intake port to the drain port in the electric propulsion device,
a motor water jacket (65) configured to cool the motor with cooling water taken into the electric propulsion device, and
an inverter water jacket (71) configured to cool the inverter with cooling water taken into the electric propulsion device, and
the motor water jacket and the inverter water jacket are connected in series between the intake port and the drain port in the electric propulsion device.

2. The electric propulsion device according to claim 1, wherein
the motor water jacket is provided in a motor case (6) of the motor,
first ports (67, 68) are provided at each of both ends of the motor water jacket to communicate inside of the motor water jacket with outside of the motor water jacket,
one of the first ports of the motor water jacket is provided on an upper surface of the motor case,
the inverter water jacket is provided in an inverter case (13) of the inverter,
second ports (73, 74) are provided at each of both ends of the inverter water jacket to communicate inside of the inverter water jacket with outside of the inverter water jacket,
one of the second ports of the inverter water jacket is provided on a lower surface of the inverter case, and
the one of the first ports of the motor water jacket and the one of the second ports of the inverter water jacket at least partially face each other.

3. The electric propulsion device according to claim 1, wherein the inverter water jacket is provided in a lower part of an inverter case of the inverter.

4. The electric propulsion device according to claim 1, further comprising:
a speed reducer (18), provided below the motor in the upper part of the electric propulsion device, and configured to reduce a rotation output from the motor and to transmit the rotation to the propeller, wherein
the cooling device includes a speed reducer water jacket (60) configured to cool the speed reducer with cooling water taken into the electric propulsion device, and
the speed reducer water jacket, the motor water jacket, and the inverter water jacket are connected in series between the intake port and the drain port in the electric propulsion device from the intake port to the drain port in an order of the speed reducer water jacket, the motor water jacket, and the inverter water jacket or in an order of the inverter water jacket, the motor water jacket, and the speed reducer water jacket.

5. The electric propulsion device according to claim 4, wherein
the motor water jacket is provided in a motor case (6) of the motor,
first ports (67, 68) are provided at each of both ends of the motor water jacket to communicate inside of the motor water jacket with outside of the motor water jacket,
one of the first ports of the motor water jacket is provided on a lower surface of the motor case,
the speed reducer water jacket is provided in a speed reducer case (21) of the speed reducer,
third ports (62, 63) are provided at each of both ends of the speed reducer water jacket to communicate inside of the speed reducer water jacket with outside of the speed reducer water jacket,
one of the third ports of the speed reducer water jacket is provided on an upper surface of the speed reducer case, and
the one of the first ports of the motor water jacket and the one of the third ports of the speed reducer water jacket at least partially face each other.

6. The electric propulsion device according to claim 5, further comprising:
a transmission shaft (26) extending downward from the speed reducer and configured to transmit a rotation output from the speed reducer to the propeller, wherein
the motor includes an output shaft (3) extending in a vertical direction,
a lower end of the output shaft is inserted into the speed reducer from above the speed reducer,
the speed reducer includes a first gear (19) and a second gear (20) configured to rotate by a rotation of the first gear,
the first gear is attached to the lower end of the output shaft,
the second gear is attached to an upper end of the transmission shaft, and
the speed reducer water jacket is provided in a portion of the speed reducer case extending from below the first gear to below the second gear.

7. The electric propulsion device according to claim 6, wherein
the pump is disposed below the speed reducer, and
another one of the third ports of the speed reducer water jacket at least partially faces a discharge port (57) provided in a pump case (56) of the pump.

8. The electric propulsion device according to claim 2, wherein
the cooling device includes a drain tube (78) configured to carry a cooling water flowed out of another one of the second ports of the inverter water jacket to the drain port, and
the drain tube passes a position outside the motor and spaced apart from the motor.

9. The electric propulsion device according to claim 1, wherein
in the cooling device, the cooling water taken into the electric propulsion device from the intake port flows in the motor water jacket, then flows in the inverter water jacket, and is then discharged from the drain port to outside of the electric propulsion device, and
the cooling device includes a valve (83, 92) configured to change an amount of the cooling water flowing out of the inverter water jacket according to a temperature of the cooling water flowing in a terminal end of a cooling water passage (72) of the inverter water jacket.
